# FASCICULE DE BREVET EUROPEEN

(11) **EP 0 493 182 B1**
(45) Date de publication et mention de la délivrance du brevet: **06.04.1994**
(21) Numéro de dépôt: 91403401.2
(22) Date de dépôt: 16.12.1991
(51) Int. Cl.: F16L 3/123

(54) **Collier de fixation**
Rohrschelle
Pipe clamp

(30) Priorité: 24.12.1990 FR 9016224
(43) Date de publication de la demande: 01.07.1992
(73) Titulaire: Etablissements CAILLAU, F-92130 Issy-les-Moulineaux (FR)
(72) Inventeur: Calmettes, Lionel, F-41200 Romorantin Lanthenay (FR); Andre, Michel, F-41200 Romorantin Lanthenay (FR)
(74) Mandataire: Descourtieux, Philippe

(56) Documents cités:
- US-A- 2 373 300
- US-A- 2 466 912
- US-A- 2 466 921
- US-A- 3 748 697

## Description

On connaît déjà, notamment par les brevets US-A-2.466.912 et US-A-2.466.921, des colliers permettant la fixation simple d'un tube, d'un faisceau de câbles ou d'objets allongés analogues sur un support plan. De tels colliers sont utilisés dans de très nombreuses industries, en particulier dans la construction automobile et la construction aéronautique, aussi bien que dans l'industrie du bâtiment. Le support sur lequel l'objet doit être fixé peut ainsi être une zone plane du carter d'un appareil, ou toute cloison, métallique ou non.

Un collier du genre en question comporte essentiellement une bande métallique partiellement enroulée sur elle-même pour constituer un anneau ouvert, à l'intérieur duquel l'objet à fixer sera introduit. L'une des extrémités de l'anneau présente une extension plane possédant un perçage pour le passage d'une vis de fixation du collier sur son support. Pour assurer la fermeture de l'anneau, en général sans serrage important, il est prévu, d'une part, une pluralité d'ouvertures transversales à la bande, ménagées dans l'extrémité de l'anneau opposée à l'extension plane, d'autre part, sur l'autre extrémité de l'anneau, une patte allongée sensiblement perpendiculaire à l'extension plane. L'extrémité libre de ladite patte est conformée en un crochet, dirigé vers l'intérieur du collier et susceptible d'être introduit, pour la fermeture de l'anneau du collier, dans l'une desdites ouvertures.

Les colliers connus de ce genre et notamment ceux décrits par les brevets précités présentent divers inconvénients.

D'une part, l'extension plane est relativement fragile et peut trop facilement être déformée par rapport à l'anneau du collier. D'autre part, le mode de réalisation de la patte d'accrochage prévue sur l'extension plane conduit à une perte non négligeable du matériau de la bande. Enfin, on doit encore souligner que la forme des ouvertures destinées à recevoir le crochet situé à l'extrémité de la patte conduit à donner à ce crochet, et par conséquent à la bande elle-même, une épaisseur relativement importante pour éviter toute déformation du crochet après serrage de l'anneau du collier. Il en résulte que, pour toute dimension du collier, son poids et son prix de revient sont relativement et inutilement élevés.

L'invention a pour objet un collier de fixation du genre qui vient dêtre rappelé, dont la structure est améliorée pour en éliminer les inconvénients qui ont été exposés.

Selon une première caractéristique de l'invention, les ouvertures transversales destinées à recevoir le crochet de la patte, sont constituées par des "crevés". On sait qu'un "crevé" est obtenu par une simple découpe rectiligne, dans une bande de métal, sans enlèvement de métal, cette opération étant suivie d'une "passe" d'emboutissage visant à déformer localement la bande, pour y faire apparaître une fente oblique par rapport au plan de la bande.

De tels "crevés" sont connus, par exemple par le brevet US-A- 3 748 697.

L'invention a également pour objet procédé de fabrication selon la revendication 4.

L'invention sera mieux comprise et ses avantages ainsi que d'autres caractéristiques apparaîtront au cours de la description d'un mode de réalisation en référence au dessin annexé dans lequel
- La figure 1 est une vue en perspective d'un collier selon l'invention, dans sa position ouverte
- La figure 2 est une vue de côté du collier représenté sur la figure 1, mais dans sa position fermée.

Si l'on se reporte au dessin, on voit un collier ***1*** constitué par une bande de métal enroulée sur elle-même, de façon à former un anneau ouvert ***1**a*** dont l'une des extrémités est pouvue d'une extension plane ***1**b***. Une patte ***2*** est disposée sur l'extension ***1**b*** au voisinage de son raccordement avec l'anneau ***1**a*** et est sensiblement perpendiculaire au plan de cette extension. L'extrémité libre de la patte ***2*** est conformée en un crochet ***2**a*** dirigé vers l'intérieur de l'anneau.

Pour obtenir la patte ***2*** et comme représenté sur le dessin, on effectue d'abord une découpe partielle dans l'extension ***1**b***, sur les deux grands côtés et le petit côté, le plus proche de l'extrémité de l'extension ***1**b***, d'un profil rectangulaire allongé dans la direction longitudinale de la bande. La portion ainsi découpée est ensuite redressée vers l'intérieur de l'anneau ***1**a***, c'est-à-dire vers son extrémité portant les ouvertures ***1**c***, et constitue alors la patte ***2***. Il subsiste donc après cette opération un perçage ***3*** dans l'extension ***1**b***.

Sur l'extrémité de l'anneau ***1**a***, opposée à l'extension ***1**b*** , sont prévues plusieurs ouvertures ***1**c***, disposées transversalement à la bande. Ainsi qu'on le voit, ces ouvertures résultent de la formation de "crevés" s'étendant seulement sur une partie de la largeur de la bande. On notera ici que les "crevés" peuvent, suivant le cas, faire saillie soit vers l'intérieur, soit vers l'extérieur du collier.

D'autre part, il est généralement souhaitable de raidir la zone de raccordement ***1**d*** entre l'extension ***1**b*** et l'extrémité de l'anneau ***1****a* qui la porte. A cet effet, la zone ***1**d*** est constituée par un petit épaulement délimité par deux plis transversaux, de sorte que l'extension ***1**b*** fait légèrement saillie vers l'extérieur du collier, par rapport à la branche de l'anneau qui la porte. Un bossage ***1**e*** réalisé par un estampage de la bande, fait saillie à l'extérieur du collier et s'étend longitudinalement, depuis l'extension ***1**b*** sur la branche qui la porte. La face extérieure du bossage ***1**e*** est située dans le même plan que l'extension ***1**b***. Le raidissement ainsi obtenu est complété par deux nervures ***1**f*** sensiblement longitudinales, situées dans la zone de raccordement ***1**d*** au voisinage des bords latéraux de la bande et s'étendant quelque peu sur l'extension ***1**b*** et sur l'anneau ***1**a***.

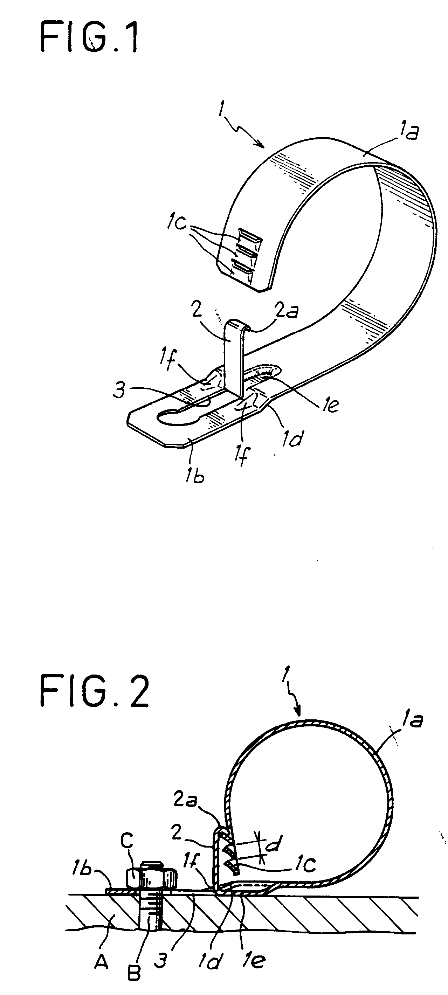

Le collier qui vient d'être décrit est utilisé d'une façon analogue à celle des colliers décrits dans les brevets précités. L'objet à fixer (tube, faisceau de câbles, etc., ...) est introduit dans l'anneau ***1**a*** alors que celui-ci est dans sa position ouverte représentée sur la figure 1. Cette opération peut s'effectuer par coulissement, transversalement au collier, ou au contraire en profitant de l'élasticité du matériau de la bande pour augmenter suffisamment l'ouverture de l'anneau ***1**a***.

Dans de nombreux cas, une gaine souple et éventuellement isolante (non représentée) sera disposée autour de l'anneau ***1**a*** et sa seule présence permet de maintenir provisoirement le collier en place sur l'objet à fixer. Il peut cependant être nécessaire de parfaire ce montage provisoire en fermant le collier par engagement du crochet ***2**a*** dans l'ouverture ***1**c*** la plus extrême.

Le collier est ensuite monté sur son support ***A***, visible sur la figure 2, sur lequel une tige filetée ***B*** est avantageusement soudée. Après engagement du perçage ***3*** sur l'extrémité de la tige ***B***, un écrou ***C*** permet la fixation du collier sur son support. Dans certains cas, comme on le voit sur la figure 1, le perçage ***3*** présente une extrémité arrondie, correspondant au diamètre de la tige ***B***. Le bossage ***1**a***, outre le raidissement qu'il procure à l'ensemble ainsi fixé, augmente la zone d'appui du collier sur son support et assure ainsi une bonne stabilité de la fixation.

Après avoir correctement réglé la position de l'objet à fixer dans le collier, ce dernier est énergiquement fermé en engageant le crochet ***2**a*** de la patte ***2*** dans celle des ouvertures ***1**c*** qui peut être atteinte sans provoquer une déterioration de l'objet. En pratique on appuiera fortement sur la partie supérieure de l'anneau ***1**a*** (FIG.2) jusqu'à ce que l'ouverture ***1**c*** désirée soit amenée en regard du crochet ***2**a*** qui s'y engagera de lui-même grâce à l'élasticité de la patte ***2***.

Si l'objet fixé dans le collier doit être démonté, il n'est pas nécessaire d'enlever l'écrou ***C***. Au contraire, il suffit de dégager le crochet ***2**a*** de l'ouverture ***1**c*** dans laquelle il se trouve pour pouvoir faire coulisser l'objet dans le collier ou éventuellement l'extraire par l'ouverture ainsi créée dans l'anneau ***1**a***.

La facilité d'utilisation de ce type de collier, telle qu'elle vient d'être exposée, constitue certes l'un de ses principaux avantages. Toutefois, il faut en outre souligner que, grâce aux dispositions particulières prévues par l'invention, la fabrication du collier est particulièrement économique.

D'une part, elle n'engendre pratiquement aucun déchet du matériau constituant la bande. En particulier le perçage ***3*** résulte essentiellement de l'espace libéré par le redressement de la patte ***2*** et il n'est pas nécessaire, comme c'était le cas des colliers connus de prévoir un perçage spécial pour le passage de la tige filetée permettant la fixation.

De même, on a déjà souligné que les "crevés" nécessaires à la formation des ouvertures ***1**c*** n'entraînent aucune chute du matériau de la bande. On doit ici ajouter que le "pas" ***d*** (FIG.2) de la crémaillère d'accrochage, c'est-à-dire la distance entre les découpes de deux ouvertures ***1**c*** contigües, est plus petit que le "pas" des ouvertures prévues sur les colliers connus de mêmes dimensions; il en résulte que le serrage de l'anneau ***1**a*** sera facilité et plus précis.

En outre, et cet avantage est particulièrement important, l'engagement du crochet ***2**a*** dans la fente oblique d'une ouverture ***1**c*** l'empêche de se déformer : sa face supérieure vient en effet s'arc-bouter sur le bord supérieur de l'ouverture. Il en résulte la possibilité, pour un effort de serrage déterminé, de diminuer l'épaisseur du crochet et, par conséquent, de toute la bande constituant le collier. De plus, toutes autres conditions étant conservées, l'épaisseur de la bande peut être réduite sans nuire à la rigidité nécessaire de la zone ***1**d*** raccordant l'anneau ***1**a*** et son extension plane ***1**b***, grâce aussi bien aux nervures ***1**f*** qu'au bossage ***1**e***.

En définitive, toutes les dispositions prévues par l'invention concourrent à la diminution du poids et, par conséquent, du prix de revient du collier; on a déterminé en effet qu'une économie de matière d'environ 30 % peut être réalisée par rapport à la fabrication des colliers connus.

## Revendications

1. Collier de fixation, permettant l'assujettissement d'un tube, d'un faisceau de câbles ou d'objets analogues sur un support, comportant une bande métallique enroulée sur elle-même pour constituer un anneau ouvert (***1**a***), dont l'une des extrémités présente une extension plane (***1**b***) munie d'un perçage (***3***) pour le passage d'une vis de fixation, cependant que dans l'extrémité libre de l'anneau, opposée à l'extension plane, sont prévues plusieurs ouvertures (***1**c***) transversales à la bande, et que sur l'autre extrémité de l'anneau, est disposée une patte allongée (***2***) sensiblement perpendiculaire à l'extension plane (***1**b***), l'extrémité libre de ladite patte étant conformée en un crochet (***2**a***), dirigé vers l'intérieur du collier et susceptible d'être introduit, pour la fermeture du collier, dans l'une desdites ouvertures, caractérisé en ce que les ouvertures (***1**c***) de l'extrémité libre de l'anneau (***1**a***) sont constituées par des "crevés".

2. Collier selon la revendication 1, caractérisé en ce que l'extrémité de l'anneau (***1**a***) munie de l'extension plane (***1**b***) présente, avant la patte d'accrochage (***2***), au moins un bossage allongé (***1**e***) dont la saillie sur la face extérieure de ladite extrémité est située sensiblement dans le même plan que l'extension (***1**b***).

3. Collier selon la revendication 2, caractérisé en ce que la zone de raccordement (***1**d***) de l'extension plane sur l'extrémité correspondante de l'anneau (***1**a***) présente au moins une nervure de raidissement (***1**f***), allongée dans le sens longitudinal de la bande constituant le collier, disposée au voisinage d'un bord latéral de ladite bande et s'étendant quelque peu sur l'extension (***1**b***) et sur l'extrémité correspondante de l'anneau (***1**a***).

4. Procédé de fabrication d'un collier défini par l'une quelconque des revendications précédentes, selon lequel, après avoir repéré les deux extrémités d'une bande, destinées respectivement à constituer l'extension plane (***1**b***) et à recevoir les ouvertures (***1**c***), on effectue une découpe dans la bande, sur les deux grands côtés et sur l'un des petits côtés d'un profil sensiblement rectangulaire allongé dans la direction longitudinale de la bande, la portion ainsi découpée étant redressée perpendiculairement au plan de la bande pour constituer la patte d'accrochage (***2***), caractérisé en ce que ledit petit côté de la portion découpée est le plus proche de l'extrémité destinée à constituer l'extension plane et en ce que la portion découpée est redressée vers l'extrémité destinée à recevoir les ouvertures (***1**c***), chacune d'elles étant obtenue par une simple découpe rectiligne, transversalement à la bande, et par une déformation locale de celle-ci pour y faire apparaître une fente oblique par rapport au plan de la bande.

## Patentansprüche

1. Klemmschelle zur Befestigung eines Rohres, eines Kabelbündels od. dgl. Gegenstandes auf einem Träger, mit einem Metallband, das zur Bildung eines offenen Ringes (1a) aufgerollt ist, dessen eines Ende eine plane Verlängerung (1b) aufweist, die für den Durchtritt einer Befestigungsschraube mit einer Bohrung (3) versehen ist, während in dem der planen Verlängerung entgegengesetzten, freien Ende des Ringes mehrere Öffnungen (1c) quer zum Band vorgesehen sind und am anderen Ende des Ringes eine zur planen Verlängerung (1b) im wesentlichen senkrechte längliche Pratze (2) angeordnet ist, wobei das freie Ende der Pratze in Form eines Hakens (2a) ausgebildet ist, der von der Schelle nach innen gerichtet ist und zum Schließen der Klemmschelle in eine der Öffnungen eingeführt werden kann, dadurch gekennzeichnet, daß die Öffnungen (1c) des freien Endes des Ringes (1a) durch "Einschnitte" gebildet sind.

2. Klemmschelle nach Anspruch 1, dadurch gekennzeichnet, daß das mit der planen Verlängerung (1b) versehene Ende des Ringes (1a) vor der Verhakungspratze (2) mindestens einen länglichen Höcker (1e) aufweist, der im wesentlichen in derselben Ebene wie die Verlängerung (1b) von der Außenseite des besagten Endes absteht.

3. Klemmschelle nach Anspruch 2, dadurch gekennzeichnet, daß die Verbindungszone (1d) der planen Verlängerung am entsprechenden Ende des Ringes (1a) mindestens eine Versteifungsrippe (1f) aufweist, die in Längsrichtung des die Klemmeschelle bildenden Bandes gestreckt ist, in der Nähe eines Seitenrandes des Bandes angeordnet ist und sich etwas über die Verlängerung (1b) und über das entsprechende Ende des Ringes (1a) erstreckt.

4. Verfahren zur Herstellung einer Klemmschelle nach einem der vorhergehenden Ansprüche, gemäß welchem nach Markieren der beiden Enden eines Bandes, die die plane Verlängerung (1b) bilden bzw. die Öffnungen (1c) aufnehmen sollen, im Band bei den beiden Längsseiten und bei einer der Breitseiten eines im wesentlichen langgestreckten rechteckigen Profils in Längsrichtung des Bandes ein Einschnitt vorgenommen wird, wobei der so eingeschnittene Teil senkrecht zur Ebene des Bandes zur Bildung der Verhakungspratze (2) aufgerichtet wird, dadurch gekennzeichnet, daß die Schmalseite des eingeschnittenen Teils die dem zur Bildung der planen Verlängerung bestimmten Ende nächstliegende ist und daß der eingeschnittene Teil zu dem Ende aufgerichtet wird, das zur Aufnahme der Öffnungen (1c) bestimmt ist, von denen jede durch einen einfachen geradlinigen Schnitt quer zum Band und durch eine örtliche Verformung desselben, um dort einen in bezug auf die Ebene des Bandes schrägen Schlitz erscheinen zu lassen, erhalten wird.

## Claims

1. Attachment clamp for securing a tube, a bundle of cables or like objects on a support, comprising a metal strap wound on itself to constitute an open ring ***(1**a**)***, of which one of the ends presents a straight extension ***(1**b**)*** provided with a hole ***(3)*** for the passage of a fixing screw, whereas on the free end of the ring, opposite the straight extension, are provided a plurality of openings ***(1**c**)*** transverse to the strap, and whereas on the other end of the ring, is disposed an elongated tab ***(2)*** which is substantially perpendicular to the straight extension ***(1**b**)***, the free end of said tab being shaped as a hook ***(2**a**)*** which is directed towards the inside of the clamp and which is capable of being introduced in one of said openings in order to close the clamp, characterized in that the openings ***(1**c**)*** of the free end of the ring ***(1**a**)*** are constituted by "embossed portions".

2. Clamp according to claim 1, characterized in that the end of the ring ***(1**a**)*** provided with the straight extension ***(1**b**)*** presents, before the hooking tab ***(2)***, at least one elongate boss ***(1**e**)*** whose projection on the outer face of said end is located substantially in the same plane as the extension ***(1**b**)***.

3. Clamp according to claim 2, characterized in that the zone of join ***(1**d**)*** of the straight extension on the corresponding end of the ring ***(1**a**)*** presents at least one reinforcing rib ***(1**f**)***, elongated in the longitudinal direction of the strap constituting the clamp, disposed in the vicinity of a lateral edge of said strap and extending somewhat over the extension ***(1**b**)*** and on the corresponding end of the ring ***(1**a**)***.

4. Method for producing a clamp defined by any one of the preceding claims, according to which, after having located the two ends of a strap, adapted to constitute the straight extension ***(1**b**)*** and to receive the openings ***(1**c**)*** respectively, a cut-out is made in the strap, on the two large sides and on one of the small sides of a substantially elongated rectangle in the longitudinal direction of the strap, the portion thus cut-out being straightened up perpendicularly to the plane of the strap so as to constitute the hooking tab ***(2)***, characterized in that said small size of the cut-out portion is closest to the end designed to constitute the straight extension and in that the cut-out portion is straightened up towards the end adapted to receive the openings ***(1**c**)***, each one of which being obtained by a simple rectilinear cut-out, transverse to the strap, and by a local deformation thereof in order to produce therein an oblique slot with respect to the plane of the strap.
